# EUROPEAN PATENT APPLICATION

(11) **EP 1 689 144 A1**
(43) Date of publication of application: **09.08.2006**
(21) Application number: 05100777.1
(22) Date of filing: 04.02.2005
(51) Int. Cl.: H04L 29/06

(54) **Security system and method for firewall and associated product**

(71) Applicant: Thomson Licensing, 92100 Boulogne-Billancourt (FR)
(72) Inventor: Bordes, Philippe, 35890, Laille (FR); Guillotel, Philippe, 35770, Vern sur Seiche (FR); Viellard, Thierry, 35410, Osse (FR)
(74) Representative: Berthier, Karine

(57) **Abstract**

The present invention relates to a system (1) and a method of security for a firewall.

The system comprises means of communication (11) with an application (APP) provided to make connections via the firewall, means (12) of identifying at least one delegation parameter supplied by this application, provided to recognize this application as capable of establishing connections when the delegation parameter complies with at least one reference parameter (PARAO) and command means (13) for establishing connections, based on requests originating from this application.

The security system also comprises means (20) of producing the reference parameter, including means (21) of automatic generation and/or command means (22) for automatic distribution, to a list of permitted users, of the reference parameter. It is thus possible to communicate in advance to users the reference parameter to be supplied as the delegation parameter.

## Description

The present invention relates to a security system and method for a firewall and to an associated computer program.

The rapid development of services on the Internet owes its success partly to the great ease of interconnection and of interchange of data of all sorts. However, certain undesirable data streams may travel on networks and cause harmful effects (notably traffic congestion) or even transport pirate programs (viruses, worms, etc).

A solution currently used to remedy these problems consists in setting up a gateway, also called a portal, at the entrance of a network requiring protection (private network) for secure access between the private network and the Internet, furnished with a firewall. The latter is used to filter the incoming and outgoing data streams. Any packet passing through the portal is thus subject to verification against a list of authorized connections.

Three types of decisions may then be taken by the gateway:
- if the packet belongs to a data stream already listed as authorized, it passes through the gateway normally,
- if the packet belongs to a data stream already listed as unauthorized, it does not pass through the gateway,
- and if the packet belongs to a data stream not yet listed, it is momentarily blocked and the administrator is called (interactive interface) to choose the action to be taken (authorization or not).

In practice, with the steady increase of Internet traffic, the success of "peer-to-peer" applications and the appearance of multimedia applications dynamically creating new connections, the load on a secure gateway administrator is constantly increasing. The situation in general therefore proves unsatisfactory, whether the private network benefiting from protection consists of a single machine or of several.

Thus, when this network is reduced to a single machine, which then also plays the role of secure gateway, the end user of the application software programs (or applications) is also the administrator. His interaction with the machine is thus constantly interrupted by unappealing administration tasks.
Furthermore, when the private network consists of several machines, with several users and several applications, it is difficult for the administrator to make the correct decision quickly, particularly if he is not an expert (typically for a domestic network). In particular, it is often not easy to know the values of the ports effectively chosen by the application. In enterprise networks, secure gateways are frequently quite simply limited by barring any peer-to-peer connection and by blocking certain categories of data streams, such as for example data streams according to the UDP (User Datagram Protocol) protocol. Performance and types of communicating applications are then reduced accordingly.

Document EP-A2-0.910.197 discloses an improved firewall, capable of supporting multiple security strategies and/or multiple users, by applying one access rule chosen from several rules available. The firewall process may be made easier by the combined use of preloaded rules (by a firewall administrator) and dynamic rules. Such dynamic rules, which may for example include specific source and destination port numbers, are likely to be loaded at any time by authorized parties, such as a trust application, a proxy server or a remote firewall administrator. These dynamic rules may serve for a single session, have a limited use over time or be exploited only when certain conditions are satisfied.

Such a solution offers a very great flexibility for adapting the filtering rules in the firewall and may make it possible to substantially reduce the interventions of the secure gateway administrator. In particular, it may authorize a delegation of certain connection authorization tasks to an application, a proxy server or a remote administrator satisfying certain criteria (typically validated by verifying the source of the messages received and/or the type of applications).
However, this technique introduces a system vulnerability with respect to a malicious incursion and in particular makes possible a penetration and a change of the security rules by a pirate application that is however permitted according to the criteria chosen.

Also known are anti-virus systems implemented in secure gateways and responsible for stopping all the applications containing identified viruses.
Such techniques, however useful or even indispensable they may be, can be used only to provide a fairly limited filtering, based on the recognition of parasitic and damaging programs already known, or satisfying specific exclusion criteria. On the other hand, they are ineffective against applications likely to cause harm when the latter contain no viruses that can be identified based on the chosen criteria. In addition, they do not solve the problems of authorization or non-authorization of connections in cases of applications that are a *priori* acceptable.

A tempting solution to improve the security conditions of the firewall would consist in tightening the applicable selection rules by multiplying the checks. This tightening of the rules could apply not only to the connection authorizations but also to the permission criteria of a trust application, of a proxy server or of a remote firewall administrator according to the technique disclosed in the prior document EP-A2-0.910.197. For example, delegating the tasks to a remote administrator would require the verification not only of his source address, but also of the destination port and of the nature of the application.
This solution could be used to increase the reliability of the system, but to the detriment of flexibility of use. In addition, it would require processes more complex and costly in operations at the firewall to collect the data to be tested and execute the validation algorithms.
It has furthermore been proposed to enhance the security of access to a firewall, with respect to users having the possibility of authorizing and barring connections. Techniques of this type are based on the authentication of the users, and notably on the transmission of a password to the firewall system, in order to check the identity of the user requiring access.
Thus, patent application US-2003/0233582 describes a method for a network firewall, this firewall being dynamically configurable via an authentication mechanism. Dynamic rules may be used in addition to preloaded access rules, these rules being added or deleted by a firewall controller. To do this, a client opens a session with the firewall controller and, once authenticated, may access the firewall.
Patent US-6609154 discloses for its part a method of controlling access to a network by local authentication of a client. A network device for this is capable of intercepting an item of network traffic initiated by a client and directed towards the network resources. If authentication is successful, the network device is dynamically reconfigured to authorize the network traffic to reach the resources.
Such techniques reduce the risks of fraud on the identity of a machine user. However, they compel a relatively complex local management which is used to take account of all the permitted users and of the authentication parameters that are respectively associated with them. This complexity proves greater when several users use one and the same machine, for example with the Unix operating system. In addition, the inclusion of dynamic modifications of the rights (for example if permissions are granted for predefined periods) further adds to the processing difficulties.

The present invention relates to security systems for a firewall making possible great reliability of packet filtering at the firewall while being able to use processes relatively simple and not costly in operations. In addition, the security systems of the invention are capable of authorizing a significant reduction in the risks of malicious intrusions and of considerably simplifying the task of the administrator of the secure gateway furnished with the firewall. II.

The invention also relates to a security method and a computer program having the aforementioned advantages. It applies notably to a connection between a domestic network and a wide outside network, such as the Internet in particular.

To this end, the invention relates in particular to a security method for firewall comprising steps of:
- communication with an application provided in order to make connections via the firewall,
- automatic identification of at least one delegation parameter supplied by this application and automatic recognition of the application as capable of establishing connections via the firewall when this delegation parameter complies with at least one reference parameter recorded in a storage space,
- and commands for automatic establishment of connections via the firewall, these commands being based on requests originating from the application.

According to the invention, the method also comprises a step of sending in advance to at least one user of this application the reference parameter to be supplied as the delegation parameter.

Thus, the method of the invention is distinct from the state of the art on anti-virus programs by a recognition of one or more delegation parameters, by comparison with one or more reference parameters, the application being capable of establishing connections in the event of conformity. In contrast, systems with anti-virus programs proceed by elimination, by setting aside the applications considered to be virus carriers. In the contrary case, they content themselves with allowing them to pass through.

Compared with the technique disclosed in document EP-A2-0.910.197, the method of the invention uses a delegation parameter that is communicated in advance to the permitted users. This parameter thus serves as a licence identifier which subsequently allows these users to obtain for their application(s) the right to establish connections at the firewall, on condition that they first present this licence identifier. On the contrary, in the prior art above, the delegation parameter is imposed by the provenance or the nature of the messages received and consists for example of a source address or of the identity of the protocol used for the application. It is therefore automatically and implicitly present in the data communicated to the firewall by the application.
The mode of validating the method of the invention by a voluntary act of the user contrasts in a surprising manner with the known techniques, in which the user has in practice no particular action to take, the firewall taking responsibility for carrying out the sorting according to parameters intrinsically linked to data of the application.

The method of the invention makes possible a significant improvement in the reliability of the firewall relative to document EP-A2-0.910.197, while alleviating the load of the administrator of the associated gateway. Specifically, it may prevent the system being penetrated and its security rules being changed by a pirate application that satisfies fixed criteria. In addition, it achieves this result without requiring a multiplication of the filtering rules, which would risk substantially encumbering the necessary processing resources.

The authorized application knows the current and future specifics of the connections, and is capable of rapidly updating at the secure gateway the list of authorized connections. These operations are capable of being carried out transparently with respect to the gateway administrator, with a high level of security.

In preferred embodiments, the security method procures the following advantages:
- the possibility of delegating to an application the authorization to pass through the secure gateway, while combining this authorization with elaborate filters,
- simplification of the gateway administrator's task,
- achievement of a security level at least equivalent to that of a conventional system, because of account bei ng taken of the specifics of the application,
- enhanced reliability against malicious intrusions.

The invention also relates to particular security systems intended to execute at least partially the security method of the invention. Such a security system can be incorporated into the firewall or take the form of a standalone external device. It may also be divided into several portions, some of which may be integrated into the firewall and others not.

A security system for firewall adapted to the security method of the invention comprises:
- means of communicating with an application provided to make connections via the firewall,
- means of identifying at least one delegation parameter supplied by this application, these identification means being provided to recognize the application as being capable of establishing connections via the firewall when the delegation parameter complies with at least one reference parameter,
- and command means for establishing connections via the firewall, these commands being based on requests originating from the application.

The security method of the invention is then used by means of the security system (integrated into the firewall or standalone), capable of delegating at least partially to this application the right to establish connections if the delegation parameter complies with the reference parameter. The security system is applied to the delegation parameter on the basis of an advance transmittal of the reference parameter to users of the application (and not on the basis of properties intrinsic to the application or to its source). The user must then produce this code every time the application concerned seeks to carry out transmissions via the firewall.

In a basic form of the security system, the reference parameter is determined and communicated to the users independently of the security system. To do this, for example, an operator of the firewall chooses the reference parameter in the form of a secret code or password, and transmits it to any permitted user, in a secure fashion. This transmission may be carried out in particular by mail, by email, or by telephone. The permitted users may in particular be identified by means of a regularly updated list, the permission being able where necessary to be based on the payment of specific subscriptions.

Other embodiments of the security system include in this system modules specific to the invention.

Thus, in a first specific form of the security system for firewall, the latter also comprises means of producing the reference parameter, these production means including means of automatically generating the reference parameter intended to be recorded in the storage space.

The automatic generation of the reference parameter can lighten the task of the firewall administrator and is capable of producing complex codes with a greater level of security than a choice made by the administrator. In addition, in preferred embodiments, the reference parameter is regularly changed, for example every month. The latter embodiments, which increase the reliability of the delegation check, risk however making it particularly tiresome for the network administrator to choose a new code and to send it to all the permitted users each time the reference parameter is changed. In addition, the temptation to choose codes close to those already chosen before may be great, to the detriment of the level of security of the system.
The inclusion of automatic generation means in the security system is thus capable of substantially lightening the task of the administrator, while being capable of automatically supplying him with the new code to be used at each change.

In hardware terms, the automatic generation means may be implemented separately from the other means of the security device. They may also in particular be combined with these other means in a device separate from the firewall, or else be directly integrated into the firewall.

In a second specific form of the security system for firewall, the latter also comprises means of producing the reference parameter, these production means including command means for automatic distribution of the reference parameter to a list of permitted users, at the time of any new recording of the reference parameter in the storage space.

This embodiment can be used to reduce the operations to be carried out by a network administrator, in particular when periodic changes of the reference parameter are made. It is particularly valuable when the list of permitted users is large, for example in the case of an enterprise or building local area network. Indeed, this list then risks being complex and changeable, varying for example according to the arrivals and departures, or the rights granted to different people. The automatic distribution, preferably secure (for example according to known means such as encryption, authentication, and/or controlled communication network), is thus capable of preventing wearisome manual operations, of reducing the transmission costs, and/or of reducing the risks of errors.

The term "production" is understood in the broad sense of provision, whether the latter is made to the benefit of a network administrator, of applications users, or of both.

In an improved version, the command means for automatic distribution are also capable of communicating the reference parameter to any new permitted user, when this user is registered in the list of permitted users.

The first and the second specific embodiments are advantageously combined, the reference parameter then being determined automatically then communicated automatically to all the permitted users.
In addition, the security system of the invention preferably allows, in addition to the automatic means of generation and of transmission, means of manually introducing the reference parameter and/or of validation of independent transmission to permitted users. Thus, in particular, the applicable reference parameter can be communicated to a new user without it being necessary for the command means for automatic distribution to be activated. The validation of transmission may then be used to inform the command means for distribution that the user concerned already has the current reference parameter and that it is therefore no longer necessary to send it to him.

Preferably, as indicated hereinabove, the security system comprises means of periodically activating the production means. This activation may relate in particular to the automatic generation of a new reference parameter (first specific form), and/or to the command of automatic distribution of the reference parameter to the permitted users (second specific form).
The automated periodic transmission of the reference parameter is preferably based on the joint use of the automatic generation of the new parameter, but it may also be based on an advance manual recording of the new reference parameter, notably by the firewall administrator. In the latter case, according to an advantageous modality, the periodic distribution is carried out at the required intervals, whether or not the parameter has been modified previously.

Preferentially, the security system comprises connection filtering means, provided for filtering the commands for the establishment of connections by the command means, as a function of predefined selection criteria.
This coupling between on the one hand the taking account of the field attached by the user with the application, and on the other hand the exploitation of other parameters related to the connections, is particularly worthwhile. Indeed, it can be used to reliably validate the rights granted to an application, without however granting it the authorization to establish connections in an unlimited manner.

Thus, according to a first form of filtering, the connection filtering means are provided in order to exclude at least one of the connections on the basis of one or more addresses and/or source ports and/or destination ports.

According to a second form of filtering (advantageously combined with the first), the connection filtering means are provided in order to authorize the commands for the establishment of connections by the command means for the delegation parameter only during a predefined validity period.

Thus licences may be granted to users to be able to authorize the connections at the secure gateway, but only for a limited period. This precaution can be used to reduce the risks of misappropriation of the delegation parameter by unauthorized third parties who might procure a licence identifier. On the other hand, this form of filtering authorizes a grant of rights that can be renewed periodically, with where necessary compensation defined for example by the administrator of a private network.

According to other forms of filtering, advantageously combined with the foregoing, the connection filtering means are provided in order to authorize the commands for the establishment of connections only for certain addresses and/or source ports and/or destination ports, in order to authorize only certain users, and/or to exclude certain users.

Preferably, the identification means are provided in order to identify the delegation parameter in the form of a licence identifier.

In addition, the security system advantageously comprises:
- means of authenticating the delegation parameter;
- and/or means of deencrypting the delegation parameter.

These embodiments can be used to further enhance the reliability of the system, while preventing counterfeits of licences (thanks to authenticity certificates), only the licences certified by the administrator being valid, and/or by using known techniques of encryption to secure the delegation parameter.

The invention also concerns a firewall characterized in that it comprises a security system complying with any one of the forms of the invention.

The security method of the invention is preferably implemented by means of a security system complying with any one of the embodiments of the invention, such as those mentioned hereinabove.

The invention applies equally to a computer program product comprising program code instructions for the execution of the steps of the security method according to the invention, when this program is executed on a computer. "Computer program product" means a computer program medium which may consist not only of a storage space containing the program, such as a diskette or a cassette, but also of a signal, such as an electric or optical signal.

The invention will be better understood and illustrated by means of the following exemplary embodiments and implementations, in no way limiting, with reference to the appended figures in which:
- Figure 1 shows a gateway interposed between a local area network and a wide area network, furnished with a security system complying with the invention;
- and Figure 2 is a block diagram of principle detailing the security system of Figure 1.

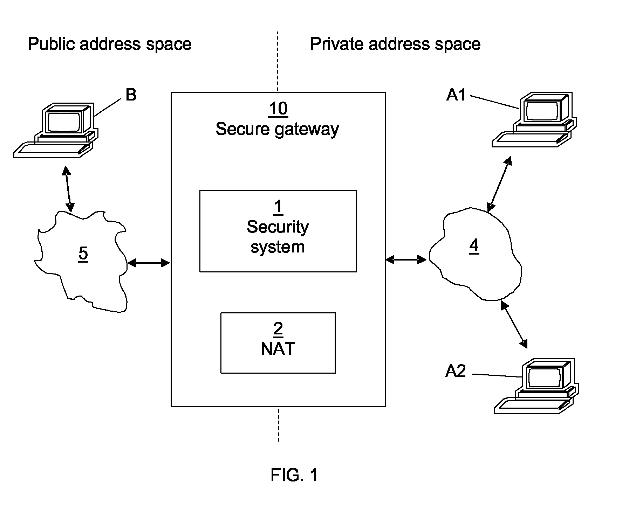

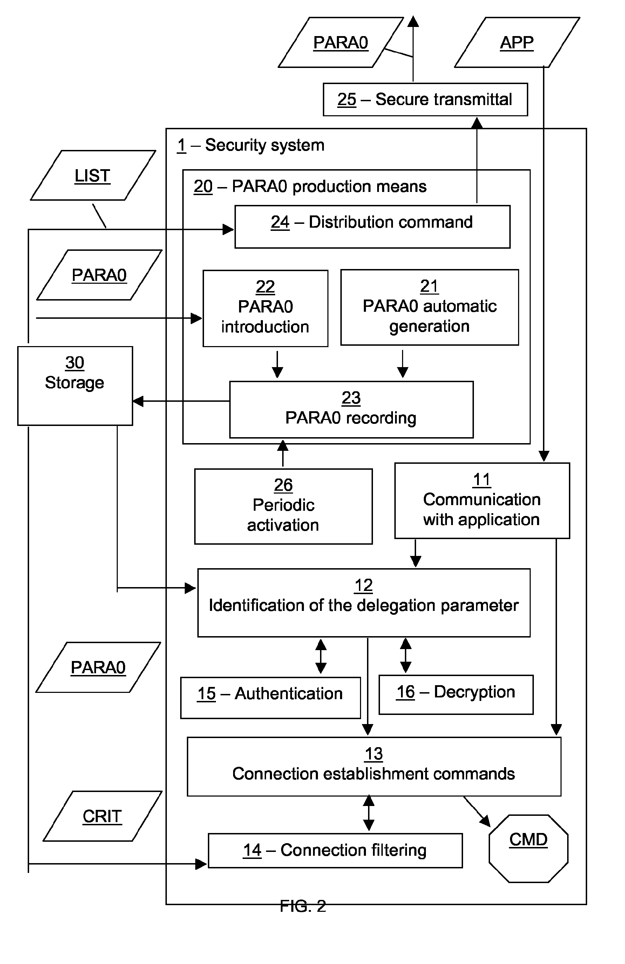

In Figures 1 and 2, the modules represented are functional units, which may or may not correspond to physically distinguishable units. For example, these modules or certain of them may be combined in a single component, or constitute functionalities of one and the same software program. On the other hand, certain modules may where necessary consist of separate physical entities.

A secure gateway 10 (Figure 1) interposed between a local area network 4 or LAN, such as a domestic network, and a wide area network 5 or WAN, such as the Internet, serves as a firewall and comprises a security system 1 and a network address translation module 2 or NAT.

The local area network 4 interconnects devices such as for example terminals A1 and A2 and the wide area network 5 to devices such as for example a server B.

The security system 1 (Figure 2) comprises more precisely the following entities:
- a module 11 of the security system 1 for communication with applications APP, originating from the local area network 4 or from the wide area network 5;
- a module 12 for identification of a valid licence identifier supplied by the application APP, by comparison with a reference parameter PARAO recorded in a storage space 30 of the gateway 10; for a connection authorization delegation to be effective, the licence identifier has previously been attached by the user to the application APP - either directly, or via a mechanism provided for this purpose based on data supplied by the user; this reference parameter PARAO can be modified at will by the administrator of the gateway 10;
- a command module 13 for the establishment of connections via the gateway 10, according to requests originating from the application APP; the application APP, once recognized as worthy of trust, may thus substitute for the administrator for issuing commands CMD authorizing or not authorizing the establishment of new connections;
- a connections filtering module 14, provided in order to filter the commands for the establishment of connections by the command module 13 according to selection criteria CRIT recorded in the storage space 30; these criteria CRIT are used for example to limit the scope of the granted licence, over time, and to certain users and/or to certain addresses and/or external ports and/or internal ports (source/destination) by explicit authorizations or by exclusions; the criteria CRIT can be modified by the administrator, but provision may also be made for remote modifications by an application or a permitted user;
- a module 15 for authenticating the licence identifier, via an authenticity certificate;
- a module 16 for decrypting the licence identifier.

The security system 1 also comprises an assembly 20 for production of the reference parameter PARAO, which includes:
- a module 21 for automatic generation of the reference parameter PARAO, for example according to known random generation techniques; the generation module 21 generates a sufficiently complex code to prevent it being easily broken;
- a module 22 for the introduction of the reference parameter PARAO by a security system administrator 1 (who is a *priori* but not necessarily the administrator of the secure gateway 10); this introduction module 22 offers a manual solution to complement the automatic solution of the generation module 21;
- a module 23 for automatic recording of the PARAO parameter, originating from the automatic generation module 21 or from the introduction module 22, in the storage space 30;
- and a command module 24 for automatic distribution of the reference parameter PARAO to a list LIST of permitted users, available in the storage space 30, via a secure transmittal module 25; the command module 24 is provided to be activated when there is any new entry of the reference parameter PARAO, based either on the generation module 21, or on the introduction module 22; it is also capable of transmitting the parameter PARAO to any user newly recorded in the list LIST.

In addition, a module 26 for periodic activation of the security system 1 is responsible for periodically activating the assembly for production of the reference parameter PARAO, which is used automatically to renew the parameter PARAO and to communicate it to the permitted users.

In operation, the administrator of the gateway 10 first grants licences to certain users, by communicating to them a licence identifier (a code) by secure means.
To each communication of an application APP with the gateway 10, the permitted users then attach this licence identifier to the application APP. When the security system 1 of the gateway 10 recognizes the licence as being valid, it delegates the authorizations for connections to the application APP (substituting for the administrator), subject to restrictive conditions that may be imposed.
Periodically (for example every month), the licence identifier is changed and the permitted users receive a new corresponding code to be used with their applications APP.

In a variant embodiment, the security system 1 applies only to messages originating from the local area network 4. As for the connections required by an application originating from the wide area network 5, they are for example decided upon on each occasion according to predefined criteria or by explicit authorization of the administrator of the gateway 10. Thus, the capabilities of granting of permission by the security system 1 are limited to the users of the local area network 4.

In another variant, the security system 1 on the contrary applies only to messages coming from the wide area network 5. Predetermined rules are then for example used for the applications originating from the local area network 4, in order to establish whether they have permission to authorize connections. The procedures that the users of the local area network 4 have to follow are thus lightened.

Generally, applying the security system 1 to all the applications passing through the gateway 10 however places few constraints on the users and is potentially useful both internally and externally.

## Claims

1. Security system (1) for firewall (10), comprising:
- means of communicating (11) with an application (APP) provided to make connections via said firewall (10),
- means (12) of identifying at least one delegation parameter supplied by said application (APP), said identification means (12) being provided to recognize said application as capable of establishing connections via the firewall (10) when said delegation parameter complies with at least one reference parameter (PARAO) recorded in a storage space (30),
- and command means (13) for establishing connections via the firewall (10), said commands (CMD) being based on requests originating from said application (APP),
**characterized in that** said security system (1) also comprises means (20) of producing said reference parameter (PARAO), said production means (20) including means (21) of automatically generating said reference parameter (PARAO) intended to be recorded in the storage space (30).

2. Security system (1) for firewall (10), comprising:
- means (11) of communicating with an application (APP) provided for making connections via said firewall (10),
- means (12) of identifying at least one delegation parameter supplied by said application (APP), said identification means (12) being provided to recognize said application as capable of establishing connections via the firewall (10) when said delegation parameter complies with at least one reference parameter (PARAO) recorded in a storage space (30),
- and command means (13) for establishing connections via the firewall (10), said commands (CMD) being based on requests originating from said application (APP),
**characterized in that** said security system (1) also comprises means (20) of producing said reference parameter (PARAO), said production means (20) including command means (22) for automatic distribution of said reference parameter (PARAO) to a list of permitted users, at the time of any new recording of said reference parameter (PARAO) in the storage space (30).

3. Security system (1) according to Claim 2, **characterized in that** it also complies with Claim 1.

4. Security system (1) for firewall (10) according to one of Claims 2 or 3, **characterized in that** the command means (22) for automatic distribution are also capable of communicating the reference parameter (PARAO) to any new permitted user, when said user is registered in said list of permitted users.

5. Security system (1) according to any one of the preceding claims, **characterized in that** it comprises periodic means (26) of activating said production means (20).

6. Security system (1) according to any one of the preceding claims, **characterized in that** it comprises connection filtering means (14), provided for filtering the commands for the establishment of connections by said command means (13), as a function of predefined selection criteria (CRIT).

7. Security system (1) according to Claim 6, **characterized in that** said connection filtering means (14) are provided in order to exclude at least one of said connections on the basis of at least one item of selection information chosen from at least one source address, at least one destination address, at least one source port and at least one destination port.

8. Security system (1) according to one of Claims 6 or 7, **characterized in that** said connection filtering means (14) are provided in order to authorize the commands for the establishment of con nections by the command means (13) for said delegation parameter only during a predefined validity period.

9. Security system (1) according to any one of the preceding claims, **characterized in that** it comprises means (15) of authenticating said delegation parameter.

10. Security system (1) according to any one of the preceding claims, **characterized in that** it comprises means (16) of decrypting said delegation parameter.

11. Firewall (10) **characterized in that** it comprises a security system (1) complying with any one of Claims 1 to 10.

12. Security method for firewall (10) comprising steps of:
- communication with an application (APP) provided in order to make connections via said firewall (10),
- automatic identification of at least one delegation parameter supplied by said application and automatic recognition of said application (APP) as capable of establishing connections via the firewall (10) when said delegation parameter complies with at least one reference parameter (PARAO) recorded in a storage space (30),
- and commands for automatic establishment of connections via the firewall (10), said commands (CMD) being based on requests originating from said application (APP),
**characterized in that** said method also comprises an advance step of sending to at least one user of said application (APP) said reference parameter (PARAO) to be supplied as the delegation parameter,
said method preferably being used by means of a security system complying with any one of Claims 1 to 10.

13. Computer program product, **characterized in that** it comprises program code instructions for the execution of the steps of the security method according to Claim 12 when said program is executed on a computer.
